# EUROPEAN PATENT SPECIFICATION

(11) **EP 4 207 556 B1**
(45) Date of publication and mention of the grant of the patent: **23.04.2025**
(21) Application number: 22848003.4
(22) Date of filing: 26.05.2022
(51) Int. Cl.: G06F 3/0354, G06F 1/16, H02J 50/12, H02J 7/00, H02J 7/34, H02J 50/40

(54) **WIRELESS CHARGING SYSTEM**
DRAHTLOSES LADESYSTEM
SYSTÈME DE CHARGE SANS FIL

(30) Priority: 30.07.2021 CN 202110871289
(43) Date of publication of application: 05.07.2023
(73) Proprietor: Honor Device Co., Ltd., Shenzhen, Guangdong 518040 (CN)
(72) Inventor: WU, Yuan, Shenzhen, Guangdong 518040 (CN); ZHANG, Wei, Shenzhen, Guangdong 518040 (CN); WANG, Chao, Shenzhen, Guangdong 518040 (CN); ZHAO, Lilie, Shenzhen, Guangdong 518040 (CN); ZHANG, Youjun, Shenzhen, Guangdong 518040 (CN)
(74) Representative: Epping - Hermann - Fischer
(86) International application number: PCT/CN2022/095331
(87) International publication number: WO 2023/005393

(56) References cited:
- WO-A1-2021/098846
- CN-A- 106 451 822
- CN-A- 107 546 803
- CN-A- 111 510 185
- CN-A- 112 514 202
- CN-A- 112 698 733
- CN-A- 113 178 900
- CN-A- 113 178 900
- CN-A- 113 629 894
- CN-A- 113 922 515
- US-A1- 2016 181 822
- US-A1- 2020 249 775
- US-A1- 2023 195 244
- US-A1- 2024 028 141

## Description

This application claims priority to Chinese Patent Application No. 202110871289.4, filed with the China National Intellectual Property Administration on July 30, 2021 and entitled "WIRELESS CHARGING SYSTEM".

### TECHNICAL FIELD

Embodiments of this application relate to the field of terminal technologies, and in particular, to a wireless charging system.

### BACKGROUND

With the development of science and technology, some electronic products (such as tablet computers) have been provided with accessories such as wireless keyboards and electronic styluses. As an input device, a wireless keyboard has an advantage of a high input speed. As a new type of input device, an electronic stylus has advantages such as easy input, self handwriting, and identity authentication.

Currently, electronic styluses are charged mainly in two manners: wired charging and wireless charging. Existing wired charging is usually implemented with an electronic stylus being provided with a wired charging interface that is connected to a power supply device such as an adapter by a cable. Such a charging manner makes it difficult to achieve intactness and beauty of electronic styluses. Existing wireless charging is usually implemented with a tablet computer and an electronic stylus each being provided with a wireless charging coil, where the electronic stylus is adhered to the tablet computer with the wireless charging coil on the electronic stylus coupled to the wireless charging coil on the tablet computer, thereby implementing wireless charging for the electronic stylus.

However, in this charging solution, because the tablet computer has weak adhesion, the electronic stylus is apt to fall off the tablet computer. In addition, when a wireless keyboard and an electronic stylus are accommodated as accessories, the wireless keyboard can usually be accommodated with the tablet computer as a whole, whereas the electronic stylus needs to be additionally accommodated. Therefore, portability of the tablet computer, the wireless keyboard, and the electronic stylus as an integrated system is comparatively poor. Furthermore, there are usually a plurality of chips disposed in a charging link of an existing charging system, which leads to comparatively high costs.

CN 113 178 900 A relates to a wireless charging system, a chip, and a wireless circuit. The wireless charging system includes an electronic device and a stylus.

CN 112 698 733 A relates to a wireless keyboard that has a storage function of an electronic handwriting pen and can wirelessly charge the electronic handwriting pen.

CN 107 546 803 A relates to a wireless charging device and a wireless charging system and method. US 2020/249775 A1 relates to a stylus for electronic devices that can be charged wirelessly.

### SUMMARY

This application provides a wireless charging system. The wireless charging system has a function of wirelessly charging an electronic stylus while accommodating the electronic stylus, so that integration of accommodation and wireless charging is implemented, and portability is good. In addition, a length of a wireless charging link is reduced, and a quantity of chips used in the link is reduced, thereby improving charging efficiency and reliability and reducing costs.

According to a first aspect, this application provides a wireless charging system. The system includes a tablet computer, a wireless keyboard, and an electronic stylus. The wireless keyboard includes a keyboard body, a support configured for placing the tablet computer, and a connection portion configured to adjustably connect the keyboard body and the support.

A first battery, a first wireless output control module, and a first wireless output coil are disposed in the tablet computer. The first wireless output control module is connected to the first battery. The first wireless output coil is connected to the first wireless output control module.

A first wireless receiving coil, a first wireless receiving control module, a first charging control module, and a second battery are disposed in the keyboard body. The first wireless receiving coil receives an electromagnetic signal sent by the first wireless output coil. The first wireless receiving control module is connected to the first wireless receiving coil. The first charging control module is connected to the first wireless receiving control module. The second battery is connected to the first charging control module.

The connection portion includes an accommodation cavity provided with an opening at one end. The accommodation cavity is configured to accommodate the electronic stylus through the opening.

A second wireless output coil is disposed in the accommodation cavity. The second wireless output coil is connected to the first wireless receiving coil. The second wireless output coil is configured to wirelessly charge the electronic stylus accommodated in the accommodation cavity.

Based on this, wireless charging apparatuses of two levels are disposed, so that the tablet computer wirelessly charges the wireless keyboard, and the wireless keyboard wirelessly charges the electronic stylus. The first wireless output control module, the first wireless output coil, the first wireless receiving coil, and the first wireless receiving control module constitute a first-level wireless charging apparatus, so that the tablet computer wirelessly charges the wireless keyboard. The first wireless receiving coil and the second wireless output coil that are directly connected to each other, and a wireless receiving coil and a wireless receiving control module that are in the electronic stylus constitute a second-level wireless charging apparatus, so that the wireless keyboard wirelessly charges the electronic stylus. The first charging control module and the second battery are disposed in the wireless keyboard. The first charging control module can be configured to control a current, a voltage, and the like for charging the second battery, so that the current and voltage are stable. The second battery can be used as a power source to supply power to the wireless keyboard.

When the wireless keyboard wirelessly charges the electronic stylus, an alternating current signal received by the first wireless receiving coil is directly transferred to the second wireless output coil, thereby implementing direct transmission of an alternating current, with no need for a conversion process of converting the alternating current into a direct current and converting the direct current into an alternating current. This saves chips needed for AC-to-DC conversion and DC-to-AC conversion, thereby reducing costs. In addition, a length of a wireless charging link is reduced, thereby improving reliability and efficiency of wireless charging.

While two-level wireless charging is implemented, the accommodation cavity is disposed in the wireless keyboard, so that the wireless keyboard accommodates the electronic stylus, thereby improving portability of the entire charging system. The second wireless output control module and the second wireless output coil are disposed in the accommodation cavity, to wirelessly charge the electronic stylus while the electronic stylus is accommodated.

In a possible design manner of the first aspect, the second wireless output coil and the first wireless receiving coil are connected by using a matching circuit, the matching circuit includes a first capacitor and a second capacitor, the first capacitor and the first wireless receiving coil form a resonant circuit, and the second capacitor and the second wireless output coil form a resonant circuit.

Based on this, the matching circuit is disposed to connect the first wireless receiving coil and the second wireless output coil, so that the alternating current signal received by the first wireless receiving coil is directly transmitted to the second wireless output coil; and the first capacitor and the second capacitor are disposed to form the resonant circuits with the first wireless receiving coil and the second wireless output coil, respectively.

In a possible design manner of the first aspect, a third wireless output coil is further disposed in the tablet computer, the third wireless output coil is connected to the first wireless output control module, and the third wireless output coil is configured to wirelessly charge the electronic stylus adhered to the tablet computer.

Based on this, the third wireless output coil is disposed in the tablet computer, and the third wireless output coil is configured to wirelessly charge the electronic stylus, so that the tablet computer wirelessly charges the electronic stylus directly.

In a possible design manner of the first aspect, a second wireless output control module and a third wireless output coil are further disposed in the tablet computer, the second wireless output control module is connected to the first battery, the third wireless output coil is connected to the second wireless output control module, and the third wireless output coil is configured to wirelessly charge the electronic stylus adhered to the tablet computer.

Based on this, in the tablet computer, the third wireless output coil is disposed, and the second wireless output control module connected to the third wireless output coil is independently disposed, where the second wireless output control module can be configured to detect, control, and transmit wireless charging energy, so that working of the third wireless output coil is unaffected by the first wireless output control module. In this way, the tablet computer can wirelessly charge the electronic stylus and the wireless keyboard at the same time.

In a possible design manner of the first aspect, a voltage stabilization control module is disposed in the tablet computer, the voltage stabilization control module is connected to the first battery, and the first wireless output control module and the second wireless output control module are both connected to the voltage stabilization control module.

Based on this, the voltage stabilization control module is disposed in the tablet computer, and the voltage stabilization control module can manage and control a voltage output by the first battery, so that the first battery can provide a stable voltage under different quantities of electricity.

In a possible design manner of the first aspect, a first control switch is disposed between the first wireless output coil and the first wireless output control module, and a second control switch is disposed between the third wireless output coil and the first wireless output control module.

Based on this, the first control switch and the second control switch are disposed, so that working states of the first wireless output coil and the third wireless output coil can be controlled. **In** this way, when the first wireless output coil and the third wireless output coil are both connected to the first wireless output control module, one of the wireless output coils is controlled to work, thereby avoiding a case in which the first wireless output coil and the third wireless output coil are both connected to the first wireless output control module and are simultaneously in the working states. In a possible design manner of the first aspect, a second wireless receiving coil, a second wireless receiving control module, a second charging control module, and a third battery are disposed in the electronic stylus.

The second wireless receiving coil receives an electromagnetic signal sent by the second wireless output coil.

The second wireless receiving control module is connected to the second wireless receiving coil, the second charging control module is connected to the second wireless receiving control module, and the third battery is connected to the second wireless receiving control module.

This design manner shows a specific configuration form of the electronic stylus.

In a possible design manner of the first aspect, the connection portion includes a rotating shaft, and the rotating shaft is configured to adjustably connect the keyboard body and the support.

The rotating shaft is hollow inside, and one end of the rotating shaft is provided with an opening, to form the accommodation cavity.

This design manner provides a specific implementation of the connection portion.

In a possible design manner of the first aspect, the connection portion includes a flexible connection piece and an accommodation part.

The flexible connection piece is configured to bend to adjustably connect the keyboard body and the support.

The accommodation part is fastened to a bending area of the flexible connection piece, the accommodation part is hollow inside, and one end of the accommodation part is provided with an opening, to form the accommodation cavity.

This design manner provides another specific implementation of the connection portion.

In a possible design manner of the first aspect, an elastic device is further disposed in the accommodation cavity, and when the electronic stylus is accommodated in the accommodation cavity, the elastic device is in contact with a second end of the electronic stylus. The elastic device is configured to: in response to a pressing operation performed by a user on a first end of the electronic stylus accommodated in the accommodation cavity, eject the electronic stylus out of the accommodation cavity from the second end in a direction of the first end. The first end is an end located at the opening when the electronic stylus is accommodated in the accommodation cavity, and the second end is an opposite of the first end.

Based on this, the elastic device is disposed in the accommodation cavity, and the elastic device can apply a specific elastic force to the electronic stylus after the elastic device is pressed, thereby making it easier to take the electronic stylus out of the accommodation cavity.

According to a second aspect, this application provides a computer-readable storage medium, including computer instructions. When the computer instructions are run on a wireless charging system, the wireless charging system is enabled to perform the functions of the wireless charging system according to any one of the first aspect or the possible design manners of the first aspect. According to a third aspect, this application provides a computer program product. When the computer program product is run on a computer, the computer is enabled to perform the functions of the wireless charging system according to any one of the first aspect or the possible design manners of the first aspect.

It can be understood that, for beneficial effects that can be achieved by the computer-readable storage medium according to the second aspect and the computer program product according to the third aspect that are provided above, reference may be made to the beneficial effects of the first aspect and any one of the possible design manners of the first aspect, and details are not described herein again.

### BRIEF DESCRIPTION OF DRAWINGS

FIG. 1 is a schematic diagram of a product form of a wireless charging system according to an embodiment of this application;
FIG. 2 is a schematic diagram of a product form of an electronic stylus according to an embodiment of this application;
FIG. 3 is a bottom view of the wireless charging system shown in FIG. 1, after the wireless charging system accommodates the electronic stylus shown in FIG. 2;
FIG. 4 is a left view of the wireless charging system shown in FIG. 1, after the wireless charging system accommodates the electronic stylus shown in FIG. 2;
FIG. 5 is a schematic diagram of a system architecture of a wireless charging system according to an embodiment of this application;
FIG. 6 is a schematic diagram of a system architecture of another wireless charging system according to an embodiment of this application;
FIG. 7 is a schematic diagram of a system architecture of still another wireless charging system according to an embodiment of this application;
FIG. 8 is a schematic diagram of a hardware structure of a tablet computer in a wireless charging system according to an embodiment of this application;
FIG. 9 is a schematic diagram of a hardware structure of a wireless keyboard in a wireless charging system according to an embodiment of this application;
FIG. 10 is a schematic diagram of a product form of another wireless charging system according to an embodiment of this application;
FIG. 11 is a schematic diagram of a product form of another wireless charging system according to an embodiment of this application;
FIG. 12 is a schematic diagram of a product form of another wireless charging system according to an embodiment of this application; and
FIG. 13 is a schematic diagram of a product form of a wireless keyboard in a wireless charging system according to an embodiment of this application.

### DESCRIPTION OF EMBODIMENTS

The following describes technical solutions in this application with reference to the accompanying drawings.

In the embodiments of this application, an expression such as "an example" or "for example" is used to represent an example, an instance, or an illustration. Any embodiment or design solution described as "an example" or "for example" in the embodiments of this application shall not be interpreted as being more preferential or advantageous than other embodiments or design solutions. To be precise, the expression such as "an example" or "for example" is intended to present a related concept in a specific manner.

In the embodiments of this application, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features.

It should be understood that the terms used in the descriptions of the various examples in this specification are merely intended to describe specific examples, but are not intended to limit this application. As used in the descriptions of the various examples, unless otherwise clearly stated in the context, singular forms "one ("a" and "an")" and "the" are intended to also include plural forms. In this application, "at least one" means one or more, and "a plurality of" means two or more. "At least one of the following items (objects)" or a similar expression means any combination of these items, including a single item (object) or any combination of a plurality of items (objects). For example, at least one item (object) of a, b, or c may represent: a, b, c, a and b, a and c, b and c, or a, b and c, where a, b, and c may be singular or plural.

It should be further understood that the term "and/or" used in this specification refers to and intends to cover any and all possible combinations of one or more of the associated listed items. The term "and/or" describes an association relationship for describing associated objects and represents the presence of three relationships. For example, A and/or B may represent the presence of three cases: only A, both A and B, and only B. In addition, the character "/" in this application generally indicates an "or" relationship between associated objects.

It should be further understood that in this application, unless otherwise specified and defined explicitly, the term "connect" should be understood in its general sense. For example, "connect" may refer to a fixed connection, a sliding connection, a detachable connection, or an integrated connection; and may be a direct connection, or an indirect connection through an intermediate medium.

It should be further understood that when used in this specification, the term "include" (also "includes", "including", "comprises", and/or "comprising") is used to specify the presence of the stated features, integers, steps, operations, elements, and/or components, but does not preclude the presence or addition of one or more other features, integers, steps, operations, elements, components, and/or groupings thereof.

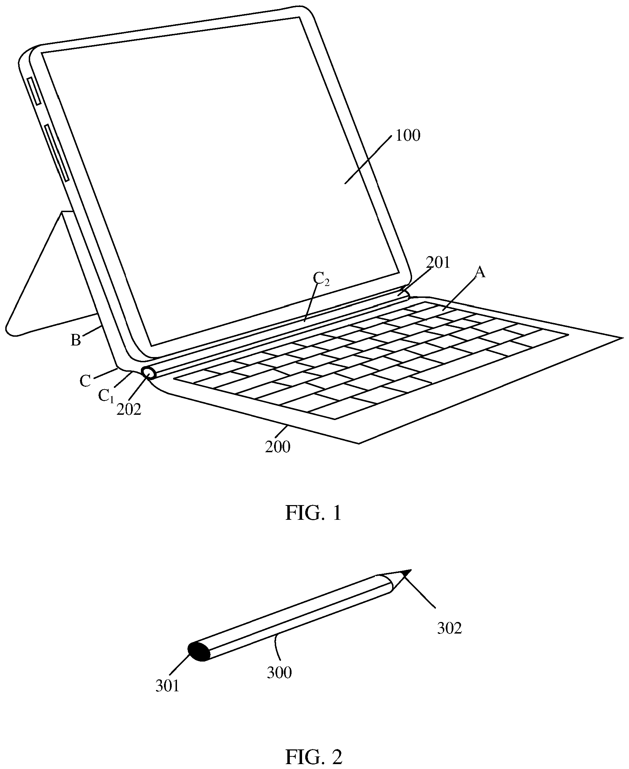

It should be understood that references to the terms "an embodiment", "another embodiment", and "a possible design manner" throughout the specification mean that specific features, structures, or characteristics related to the embodiments or implementations are included in at least one embodiment of this application. Therefore, "in an embodiment of this application", "in another embodiment of this application", and "a possible design manner" appearing throughout the specification do not necessarily refer to a same embodiment. In addition, these specific features, structures, or characteristics may be combined in one or more embodiments in any suitable manner. To resolve a prior-art problem that, for a tablet computer, a wireless keyboard, and an electronic stylus as an integrated system, accommodation is not sufficiently convenient during wireless charging, a wireless charging link is comparatively long, and costs are high, the embodiments of this application provide a wireless charging system, which can perform a function of wirelessly charging an electronic stylus while accommodating the electronic stylus, so that integration of accommodation and wireless charging is implemented, and portability is good. The following describes the embodiments of this application with reference to FIG. 1 to FIG. 13.

FIG. 1 is a schematic diagram of a product form of a wireless charging system according to an embodiment of this application. As shown in FIG. 1, the wireless charging system includes a tablet computer 100 and a wireless keyboard 200, and the wireless keyboard 200 includes a keyboard body A and a support B configured for placing the tablet computer 100 The keyboard body A and the support B are connected by using a connection portion C. The connection portion C may be a flexible material, a rotating shaft, or the like, so that the keyboard body A and the support B can rotate in relation to each other. The tablet computer 100 is placed or sleeved on the support B, to form a specific included angle with the keyboard body of the wireless keyboard 200.

As shown in FIG. 1, an accommodation cavity 201 is disposed in the connection portion C of the wireless keyboard 200 in the wireless charging system, and one end of the accommodation cavity 201 is provided with an opening 202. An electronic stylus 300 shown in FIG. 2 may be placed, through the opening 202, in the accommodation cavity 201 shown in FIG. 1. A form of the wireless charging system after accommodating the electronic stylus 300 is as follows.

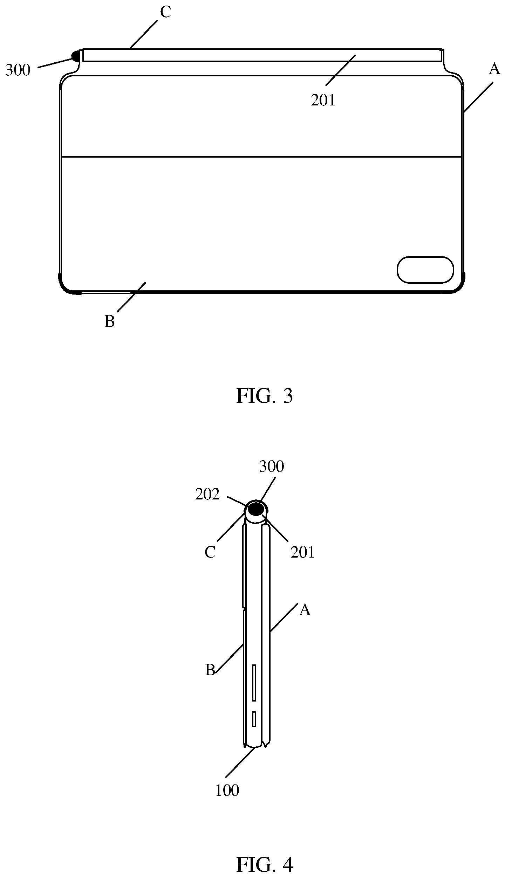

Refer to FIG. 3 and FIG. 4. FIG. 3 is a bottom view of the wireless charging system after the keyboard body A and the support B of the wireless keyboard 200 are closed and the electronic stylus 300 is inserted into the accommodation cavity 201 through the opening 202. FIG. 4 is a left view of the wireless charging system after the tablet computer 100 is placed in the support B, the keyboard body A and the support B of the wireless keyboard 200 are closed, and the electronic stylus 300 is inserted into the accommodation cavity 201 through the opening 202.

The tablet computer 100 in this embodiment of this application can wirelessly charge the wireless keyboard 200. A wireless charging coil that sends an electromagnetic signal in a charging process is disposed in the tablet computer 100. A wireless charging coil that receives the electromagnetic signal is correspondingly disposed in the wireless keyboard 200. The wireless charging coil of the wireless keyboard 200 may be coupled to the wireless charging coil of the tablet computer 100. The tablet computer 100 may transmit a wireless charging signal to the wireless keyboard 200 by using the wireless charging coil, thereby wirelessly charging the wireless keyboard 200.

The wireless keyboard 200 in this embodiment of this application can wirelessly charge the electronic stylus 300. Specifically, a wireless charging coil that can generate an electromagnetic signal may be disposed in the accommodation cavity 201 of the wireless keyboard 200. After the electronic stylus 300 is accommodated in the accommodation cavity 201 of the wireless keyboard 200, the wireless keyboard 200 can wirelessly charge the electronic stylus 300 by using the wireless charging coil disposed in the accommodation cavity 201. Certainly, a wireless charging coil is also disposed in a stylus body of the electronic stylus 300, and the wireless charging coil can receive an electromagnetic signal sent in the accommodation cavity 201. In this way, the wireless charging coil of the wireless keyboard 200 can be coupled to the wireless charging coil of the electronic stylus 300, and the wireless keyboard 200 transmits a wireless charging signal to the electronic stylus 300 by using the coupled wireless charging coil, thereby wirelessly charging the electronic stylus 300.

In addition, the tablet computer 100 can further wirelessly charge the electronic stylus 300 directly (not shown in the figure). Specifically, the electronic stylus 300 may be adhered to the tablet computer 100, a wireless charging coil that generates an electromagnetic signal for the electronic stylus 300 is disposed in the tablet computer 100, a location at which the electronic stylus 300 is adhered is close to the wireless charging coil, and a wireless charging coil that can receive the electromagnetic signal sent by the tablet computer 100 is disposed in the stylus body of the electronic stylus 300. In this way, the wireless charging coil of the tablet computer 100 can be coupled to the wireless charging coil of the electronic stylus 300, and the tablet computer 100 transmits a wireless charging signal to the electronic stylus 300 by using the coupled wireless charging coil, thereby wirelessly charging the electronic stylus 300.

In this embodiment of this application, a function of wirelessly charging the wireless keyboard 200 or the electronic stylus 300 by the tablet computer 100 by using the wireless charging coil is referred to as a "forward wireless charging function", and a function of wirelessly charging the electronic stylus 300 by the wireless keyboard 200 by using the wireless charging coil is referred to as a "backward wireless charging function".

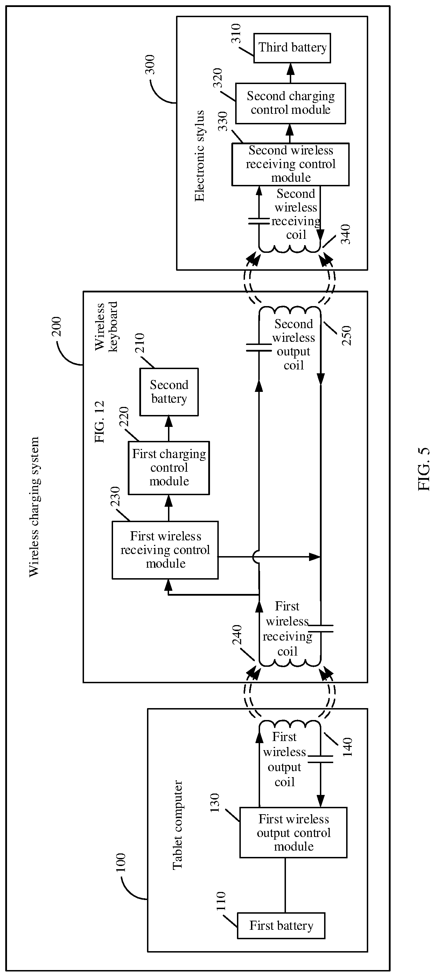

For ease of understanding, principles of wirelessly charging the wireless keyboard 200 by the tablet computer 100 and wirelessly charging the electronic stylus 300 by the wireless keyboard 200 are described in the embodiments of this application with reference to the accompanying drawings. FIG. 5 is a schematic diagram of a system architecture of a wireless charging system according to an embodiment of this application. The wireless charging system includes a tablet computer 100, a wireless keyboard 200, and an electronic stylus 300.

As shown in FIG. 5, the tablet computer 100 includes a first battery 110, a first wireless output control module 130, and a first wireless output coil 140. The first wireless output control module 130 is electrically connected to the first battery 110. The first wireless output coil 140 is electrically connected to the first wireless output control module 130. A capacitor is disposed near the first wireless output coil 140, so that the capacitor and the first wireless output coil 140 form a resonant circuit.

The wireless keyboard 200 includes a second battery 210, a first charging control module 220, a first wireless receiving control module 230, a first wireless receiving coil 240, and a second wireless output coil 250. The second battery 210 is electrically connected to the first charging control module 220. The first charging control module 220 is electrically connected to the first wireless receiving control module 230. The first wireless receiving control module 230 is electrically connected to the first wireless receiving coil 240. The second wireless output coil 250 is electrically connected to the first wireless receiving coil 240. **In** this embodiment of this application, the second wireless output coil 250 may be connected to the first wireless receiving coil 240 by using a matching circuit. In a loop (the matching circuit) formed by the first wireless receiving coil 240 and the second wireless output coil 250, a first capacitor and a second capacitor are disposed. The first capacitor is disposed close to the first wireless receiving coil 240. A value of the first capacitor and a distance between the first capacitor and the first wireless receiving coil 240 may be set in a matching manner based on an inductance value of the first wireless receiving coil 240, so that the first capacitor and the first wireless receiving coil 240 form a resonant or quasi-resonant circuit, to increase transmission power. The second capacitor is disposed close to the second wireless output coil 250. A value of the second capacitor and a distance between the second capacitor and the second wireless output coil 250 may be set in a matching manner based on an inductance value of the second wireless output coil 250, so that the second capacitor and the second wireless output coil 250 form resonance or quasi-resonance, to increase transmission power. In addition, a component such as a switch may be further disposed in the matching circuit.

In this embodiment of this application, the second wireless output coil 250 is directly connected to the first wireless receiving coil 240 by using the matching circuit. After receiving an alternating current signal from the first wireless output coil 140, the first wireless receiving coil 240 directly transfers the alternating current signal to the second wireless output coil 250 by using the matching circuit.

In a prior-art solution, after the first wireless receiving coil 240 receives an alternating current signal from the first wireless output coil 140, in the wireless keyboard 200, an RX chip needs to be disposed, where the RX chip is configured to convert the alternating current signal received by the first wireless receiving coil 240 into a direct current signal, and a TX chip needs to be disposed, where the TX chip is configured to convert the direct current signal into an alternating current signal and transfer the alternating current signal to the second wireless output coil 250.

In this embodiment of this application, the first wireless receiving coil 240 with a suitable inductance value is disposed, and the first capacitor is disposed in a matching manner near the first wireless receiving coil 240, to form the resonant circuit; and the second wireless output coil 250 with a suitable inductance value is disposed, and the second capacitor is disposed in a matching manner near the second wireless output coil 250, to form the resonant circuit. The matching circuit is disposed between the first wireless receiving coil 240 and the second wireless output coil 250, thereby implementing direct transfer of an alternating current signal, with no need for a conversion process of converting an alternating current into a direct current and converting the direct current into an alternating current. This process saves the RX chip and TX chip needed for AC-to-DC conversion and DC-to-AC conversion, and reduces a length of a wireless charging link, thereby improving reliability and efficiency of wireless charging, and reducing costs of the wireless keyboard 200.

In this embodiment of this application, a process of charging the wireless keyboard 200 by the tablet computer 100 is as follows: The first battery 110 in the tablet computer 100 may output a direct current voltage to the first wireless output control module 130, and the first wireless output control module 130 converts a direct current into an alternating current and outputs the alternating current to the first wireless receiving coil 240. The second wireless output coil 250 in the wireless keyboard 200 receives an alternating current signal transmitted by the first wireless receiving coil 240, and transmits the alternating current signal to the first wireless receiving control module 230. The first wireless receiving control module 230 may convert a received alternating current into a direct current, and deliver the direct current to the first charging control module 220, to charge the second battery 210.

The electronic stylus 300 includes a third battery 310, a second charging control module 320, a second wireless receiving control module 330, and a second wireless receiving coil 340. The third battery 310 is electrically connected to the second charging control module 320. The second charging control module 320 is electrically connected to the second wireless receiving control module 330. The second wireless receiving control module 330 is electrically connected to the second wireless receiving coil 340. A capacitor is disposed near the second wireless receiving coil 340, so that the capacitor and the second wireless receiving coil 340 form a resonant circuit.

The first wireless output control module 130 may be a TX chip of the tablet computer 100. The first charging control module 220 may be a keyboard charger (charger) of the wireless keyboard 200. The first wireless receiving control module 230 may be an RX chip of the wireless keyboard 200. The second charging control module 320 may be a stylus charger of the electronic stylus 300. The second wireless receiving control module 330 may be an RX chip of the electronic stylus 300. In a process of wirelessly charging the wireless keyboard 200 by the tablet computer 100, the first battery 110 of the tablet computer 100 may be used as a power source to supply power, and the first wireless output control module 130 in the tablet computer 100 may receive a direct current signal input by the first battery 110. The first wireless output control module 130 converts the received direct current signal into an alternating current signal, and then inputs the alternating current signal to the first wireless output coil 140. The first wireless output coil 140 generates an alternating electromagnetic field in response to the alternating current signal.

The first wireless receiving coil 240 in the wireless keyboard 200 is coupled to the first wireless output coil 140 in the tablet computer 100. The first wireless receiving coil 240 may generate an alternating current signal after sensing the alternating electromagnetic field emitted by the first wireless output coil 140, and then send the alternating current signal to the first wireless receiving control module 230. The first wireless receiving control module 230 may rectify the alternating current signal to a direct current signal, and then input the direct current signal to the first charging control module 220. The first charging control module 220 may manage the direct current signal, for example, manage an input current and voltage, and then input the direct current signal to the second battery 210, to charge the second battery 210. The second battery 210 may be used as a power source of the wireless keyboard 200.

The first wireless receiving coil 240 may generate the alternating current signal after sensing the alternating electromagnetic field emitted by the first wireless output coil 140, and may directly input part of the alternating current signal to the second wireless output coil 250 by using the matching circuit. The second wireless output coil 250 may generate an alternating magnetic field in response to the alternating current signal.

The second wireless receiving coil 340 in the electronic stylus 300 is coupled to the second wireless output coil 250 in the wireless keyboard 200. After the electronic stylus 300 is accommodated in the accommodation cavity 201 in the wireless keyboard 200, and the second wireless output coil 250 in the accommodation cavity 201 generates the alternating magnetic field, the second wireless receiving coil 340 in the stylus body of the electronic stylus 300 starts to work. The second wireless receiving coil 340 may generate an alternating current signal after sensing an alternating electromagnetic field emitted by the second wireless output coil 250, and input the alternating current signal to the second wireless receiving control module 330. The second wireless receiving control module 330 rectifies the received alternating current signal to a direct current signal, and then inputs the direct current signal to the second charging control module 320. The second charging control module 320 processes the direct current signal, and then inputs the processed direct current signal to the third battery 310, to charge the third battery 310.

The first wireless output control module 130, the first wireless receiving control module 230, the second wireless receiving control module 330, and a connection circuit between the first wireless receiving coil 240 and the second wireless output coil 250 may include matching circuits. The matching circuit may include a capacitor combination, a switch, and the like.

A matching circuit in the first wireless output control module 130 is configured to form LC resonance with the first wireless output coil 140, to improve transmission efficiency of the first wireless output coil 140. A matching circuit in the first wireless receiving control module 230 is configured to form LC resonance with the first wireless receiving coil 240, to improve receiving efficiency of the first wireless receiving coil 240. The matching circuit between the first wireless receiving coil 240 and the second wireless output coil 250 may be configured to form LC resonance with the first wireless receiving coil 240, to improve receiving efficiency of the first wireless receiving coil 240, and may also be configured to form LC resonance with the second wireless output coil 250, to improve transmission efficiency of the second wireless output coil 250. Reference may be made to descriptions of the first capacitor and the second capacitor in the foregoing content. A matching circuit in the second wireless receiving control module 330 is configured to form LC resonance with the second wireless receiving coil 340, to improve receiving efficiency of the second wireless receiving coil 340.

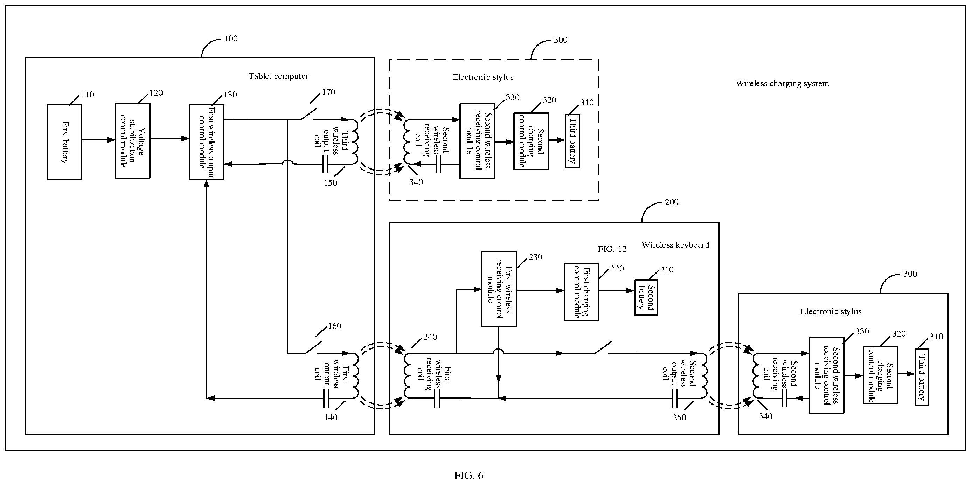

In an embodiment of this application, the tablet computer 100 further includes a third wireless output coil 150, and the third wireless output coil 150 is electrically connected to the first wireless output control module 130. FIG. 6 is a schematic diagram of a system architecture of another wireless charging system according to an embodiment of this application.

As shown in FIG. 6, a third wireless output coil 150 disposed in a tablet computer 100 may be configured to charge an electronic stylus 300. Specifically, the electronic stylus 300 may be adhered to the tablet computer 100 or placed on the tablet computer 100, so that the electronic stylus 300 is close to the third wireless output coil 150 in the tablet computer 100. In a process of wirelessly charging the electronic stylus 300 by the tablet computer 100, a first battery 110 of the tablet computer 100 may be used as a power source to supply power to a first wireless output control module 130, and the first wireless output control module 130 receives a direct current signal input by the first battery 110, and then converts the received direct current signal into an alternating current signal. Because the third wireless output coil 150 is electrically connected to the first wireless output control module 130, the first wireless output control module 130 may input the alternating current signal to the third wireless output coil 150. The third wireless output coil 150 generates an alternating electromagnetic field in response to the alternating current signal.

A second wireless receiving coil 340 in the electronic stylus 300 may be coupled to the third wireless output coil 150 in the tablet computer 100. When the electronic stylus 300 is adhered near the third wireless output coil 150 in the tablet computer 100, the second wireless receiving coil 340 may generate an alternating current signal after sensing the alternating electromagnetic field emitted by the third wireless output coil 150, and input the alternating current signal to a second wireless receiving control module 330. The second wireless receiving control module 330 rectifies the received alternating current signal to a direct current signal, and then inputs the direct current signal to a second charging control module 320. The second charging control module 320 processes the direct current signal, and then inputs the processed direct current signal to a third battery 310, to charge the third battery 310.

It should be noted that, in this embodiment of this application, a first wireless output coil 140 and the third wireless output coil 150 are both electrically connected to the first wireless output control module 130, that is, the first wireless output control module 130 controls wireless charging energy of both the first wireless output coil 140 and the third wireless output coil 150. Therefore, to ensure that the first wireless output coil 140 and the third wireless output coil 150 are provided with a sufficient voltage and current during wireless charging, usually, there is only one wireless charging coil working when the tablet computer 100 performs forward wireless charging to the outside.

In an embodiment of this application, a first control switch 160 is disposed between the first wireless output coil 140 and the first wireless output control module 130, and a second control switch 170 is disposed between the third wireless output coil 150 and the first wireless output control module 130. Working states of the first wireless output coil 140 and the third wireless output coil may be adjusted by controlling states of the first control switch 160 and the second control switch 170.

For example, the first control switch 160 may be closed, and the second control switch 170 may be open. In this case, the tablet computer 100 is in a state of wirelessly charging only a wireless keyboard 200, that is, the first wireless charging coil is in a working state, and the third wireless output coil 150 is in a non-working state, so that the first wireless charging coil 140 can be provided with a stable current and voltage and sufficient energy. Alternatively, the second control switch 170 may be closed, and the first control switch 160 may be open. In this case, the tablet computer 100 is in a state of wirelessly charging only the electronic stylus 300, that is, the third wireless charging coil 150 is in a working state, and the first wireless charging coil 140 is in a non-working state, so that the third wireless charging coil 150 can be provided with a stable current and voltage and sufficient energy.

The first wireless output control module 130 is usually integrated in a TX chip of the tablet computer 100. Therefore, with the foregoing configuration, only one TX chip may be disposed in the tablet computer 100 to control the first wireless output coil 140 and the third wireless output coil 150. This can reduce costs.

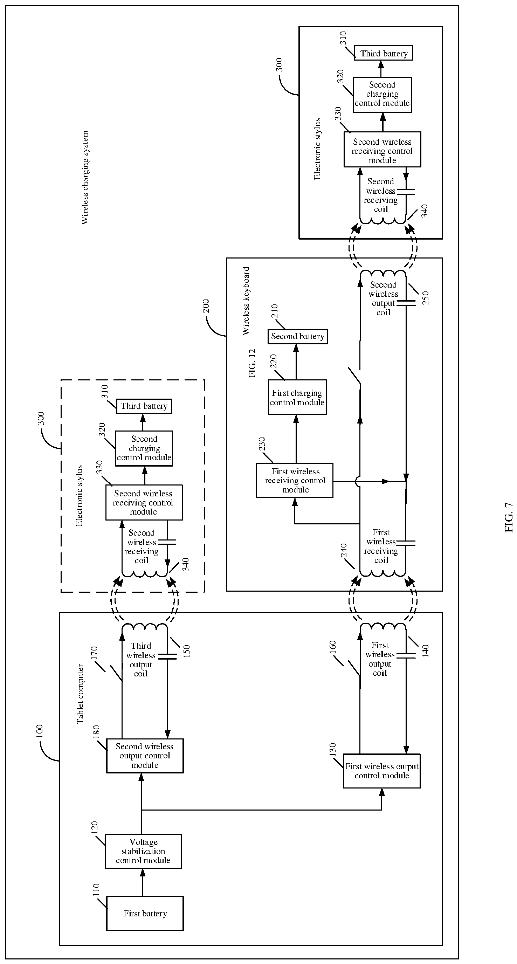

In an embodiment of this application, the tablet computer 100 further includes a second wireless output control module 180 and a third wireless output coil 150. The third wireless output coil 150 is electrically connected to the second wireless output control module 180. The second wireless output control module 180 is electrically connected to the first battery 110. FIG. 7 is a schematic diagram of a system architecture of still another wireless charging system according to an embodiment of this application.

As shown in FIG. 7, in a process of wirelessly charging an electronic stylus 300 by a tablet computer 100, a first battery 110 of the tablet computer 100 may be used as a power source to supply power to a second wireless output control module 180, and the second wireless output control module 180 receives a direct current signal input by the first battery 110, and then converts the received direct current signal into an alternating current signal. Because a third wireless output coil 150 is electrically connected to the second wireless output control module 180, the second wireless output control module 180 may input the alternating current signal to the third wireless output coil 150. The third wireless output coil 150 generates an alternating electromagnetic field in response to the alternating current signal. For interaction between the electronic stylus 300 and the third wireless output coil 150, refer to descriptions in the foregoing embodiment. Details are not described herein again.

It should be noted that, in this embodiment of this application, the tablet computer 100 may directly charge the electronic stylus 300. The tablet computer 100 may also wirelessly charge a wireless keyboard 200. While the wireless keyboard 200 is being charged, the wireless keyboard 200 may charge the electronic stylus 300. In a process of charging the electronic stylus 300, the wireless keyboard 200 may directly send, to the electronic stylus 300 by using a second wireless receiving coil 250, an alternating current signal received by using a first wireless receiving coil 240, with no need for AC-to-DC and DC-to-AC conversion. A corresponding module for converting a direct current signal into an alternating current signal, for example, a TX chip, is not disposed in a wireless charging link of the wireless keyboard 200 for the electronic stylus 300. Therefore, a second battery 210 in the wireless keyboard 200 cannot be configured to charge the electronic stylus 300. In a process of wirelessly charging the electronic stylus 300 by the wireless keyboard 200, a corresponding device (for example, the tablet computer 100) is needed to wirelessly charge the wireless keyboard 200.

The second wireless output control module 180 may be a TX chip of the tablet computer 100. In this embodiment of this application, it is equivalent to a case in which two TX chips are disposed to respectively control a first wireless output coil 140 and the third wireless output coil 150. The two TX chips may respectively perform independent control on indicators such as currents and voltages input to the first wireless output coil 140 and the third wireless output coil 150, so that the first wireless output coil 140 and the third wireless output coil 150 can work at the same time, that is, when the electronic stylus 300 is adhered to the tablet computer 100, the tablet computer 100 can wirelessly charge the electronic stylus 300 and the wireless keyboard 200 at the same time. In an embodiment of this application, as shown in FIG. 7, the tablet computer 100 further includes a voltage stabilization control module 120. The voltage stabilization control module 120 is connected in series between the first battery 110 and the first wireless output control module 130. If the second wireless output control module 180 is disposed in the tablet computer 100, the voltage stabilization control module 120 is also connected in series between the first battery 110 and the second wireless output control module 180. The voltage stabilization control module 120 may be a boost chip, a buck-boost chip, or the like. A main function of the voltage stabilization control module 120 is providing a stable voltage for the first wireless output control module 130 and/or the second wireless output control module 180 when the battery has different quantities of electricity.

The foregoing electrical connection includes a direct electrical connection and an indirect electrical connection. For example, the second wireless output control module 180 or the first wireless output control module 130 may be electrically connected to the first battery 110 directly, and the second wireless output control module 180 or the first wireless output control module 130 may also be directly connected to the voltage stabilization control module 120. Because the voltage stabilization control module 120 is directly connected to the first battery 110, equivalently, the second wireless output control module 180 or the first wireless output control module 130 is electrically connected to the first battery 110 indirectly.

It should be noted that FIG. 5, FIG. 6, and FIG. 7 show only some of schematic diagrams of possible charging circuit structures of the wireless charging system. A charging circuit structure of the wireless charging system in the embodiments of this application includes but is not limited to the structures shown in FIG. 5 to FIG. 7. For example, the wireless keyboard 200 may further include a processor, and the processor is connected to the first wireless receiving control module 230, the first charging control module 220, and the second wireless output control module 260. The processor is configured to detect whether a current is input to the first wireless receiving control module 230. The processor is further configured to control the first charging control module 220 to work, thereby implementing a forward wireless charging function for the wireless keyboard 200.

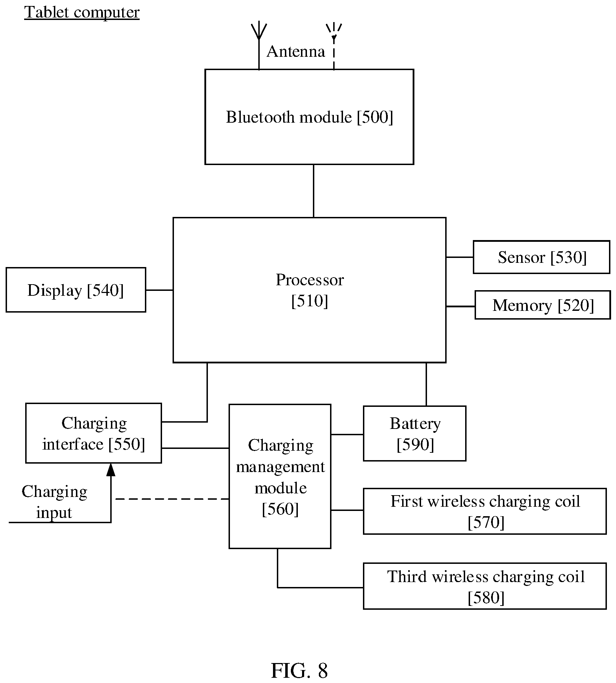

FIG. 8 is a schematic diagram of a structure of a tablet computer 100 in a wireless charging system according to an embodiment of this application. As shown in FIG. 8, the tablet computer 100 may include a wireless communications module 500, a processor 510, a memory 520, a sensor 530, a display 540, a charging interface 550, a charging management module 560, a first wireless charging coil 570, a third wireless charging coil 580, a battery 590, and the like.

It can be understood that the structure illustrated in this embodiment does not constitute a specific limitation on the tablet computer 100. **In** some other embodiments, the tablet computer 100 may include components more or fewer than those shown in the figure, or combine some components, or split some components, or have different component arrangements. The components shown in the figure may be implemented by hardware, software, or a combination of software and hardware. The memory 520 may be configured to store program code, such as program code used for wirelessly charging a wireless keyboard 200 and/or an electronic stylus 300. The memory 520 may further store a Bluetooth address used to uniquely identify the tablet computer 100. **In** addition, the memory 520 may further store connection data of an electronic device that has been successfully paired with the tablet computer 100 before. For example, the connection data may be a Bluetooth address of the electronic device that has been successfully paired with the tablet computer 100. Based on the connection data, the tablet computer 100 can be automatically paired with the electronic device with no need for configuring a connection to the electronic device, for example, performing a validity check. The Bluetooth address may be a media access control (media access control, MAC) address.

The processor 510 may be configured to execute the foregoing application program code, and invoke relevant modules to implement functions of the tablet computer 100 in the embodiments of this application, for example, implement a forward wireless charging function and a wireless communication function of the tablet computer 100. The processor 510 may include one or more processing units, and different processing units may be independent devices or may be integrated into one or more processors 510. The processor 510 may be specifically an integrated control chip, or may include a circuit including various active and/or passive components, and the circuit is configured to perform a function, of the processor 510, described in the embodiments of this application. The processor of the tablet computer 100 may be a microprocessor.

The wireless communications module 500 may be configured to support data exchange between the tablet computer 100 and other electronic devices in wireless communications such as Bluetooth (bluetooth, BT), global navigation satellite system (global navigation satellite system, GNSS), wireless local area network (wireless local area networks, WLAN) (for example, wireless fidelity (wireless fidelity, Wi-Fi) network), frequency modulation (frequency modulation, FM), near field communication (near field communication, NFC), and infrared (infrared, IR) technology.

In some embodiments, the wireless communications module 500 may be a Bluetooth chip. The tablet computer 100 may be paired with a Bluetooth chip of another electronic device by using the Bluetooth chip and establish a wireless connection, to implement wireless communication between the tablet computer 100 and the another electronic device through the wireless connection.

In addition, the wireless communications module 500 may further include an antenna. The wireless communications module 500 receives an electromagnetic wave by using the antenna, performs frequency modulation and filtering on an electromagnetic wave signal, and sends the processed signal to the processor 510. The wireless communications module 500 may further receive a to-be-sent signal from the processor 510, perform frequency modulation and amplification on the signal, convert the frequency-modulated and amplified signal into an electromagnetic wave by using the antenna, and radiate the electromagnetic wave.

In some embodiments, the tablet computer 100 may support wired charging. Specifically, the charging management module 560 may receive a charging input from a wired charger through the charging interface 550, to charge the battery 590.

In some other embodiments, the tablet computer 100 may support a function of wirelessly charging the wireless keyboard 200 and/or the electronic stylus 300. The charging management module 560 may input an electrical signal to the first wireless charging coil 570 and/or the third wireless charging coil 580. Specifically, the first wireless charging coil 570 and the third wireless charging coil 580 are separately connected to the charging management module 560 by using matching circuits. The first wireless charging coil 570 and/or the third wireless charging coil 580 may generate an alternating electromagnetic field in response to an alternating current signal input by the charging management module 560, to wirelessly charge the wireless keyboard 200 and/or the electronic stylus 300.

The charging management module 560 may further supply power to the tablet computer 100 while managing wireless charging to the outside. The charging management module 560 receives an input from the battery 590, to supply power to the processor 510, the memory 520, the sensor 530, an external memory, the wireless communications module 500, and the like. The charging management module 560 may be further configured to monitor parameters such as a battery capacity of the battery 590, a cycle count of the battery, and a state of health (leakage and impedance) of the battery. In some other embodiments, the charging management module 560 may be alternatively disposed in the processor 510.

A touch sensor may be integrated in the display 540. The tablet computer 100 may receive a control command of a user for the tablet computer 100 by using the display 540.

It can be understood that the structure illustrated in this embodiment of this application does not constitute a specific limitation on the tablet computer 100. The tablet computer 100 may have more or fewer components than those shown in FIG. 8, may combine two or more components, or may have different component configurations. For example, an outer surface of the tablet computer 100 may further include components such as a key, an indicator light (which may indicate a state such as a battery level, an incoming/outgoing call, or a pairing mode), and a display (which may notify related information to the user). The key may be a physical key, a touch key (used in combination with the touch sensor), or the like, and is configured to trigger an operation such as power-on, power-off, starting charging, or stopping charging.

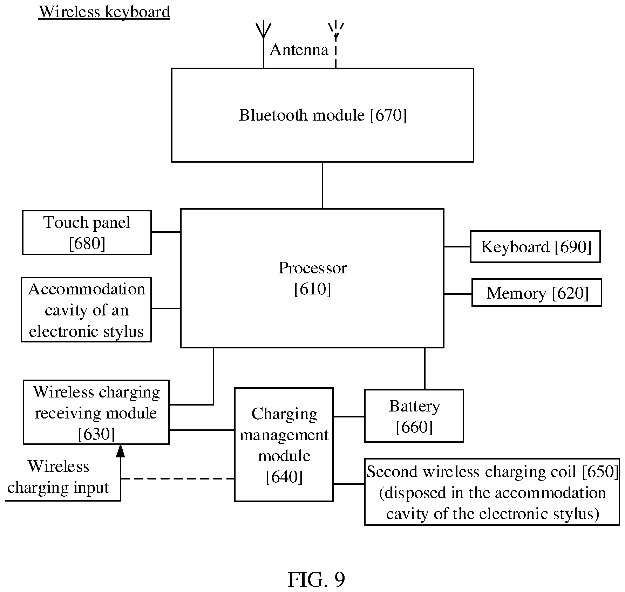

FIG. 9 is a schematic diagram of a structure of a wireless keyboard 200 in a wireless charging system according to an embodiment of this application. As shown in FIG. 9, the wireless keyboard 200 may include a processor 610, a memory 620, a wireless charging receiving module 630, a charging management module 640, a second wireless charging coil 650, a battery 660, a wireless communications module 670, a touch panel 680, a keyboard 690, and the like.

The processor 610, the memory 620, the wireless charging receiving module 630, the charging management module 640, the battery 660, the wireless communications module 670, the touch panel 680, the keyboard 690, and the like may all be disposed in a keyboard body (the keyboard body A shown in FIG. 1) of the wireless keyboard 200. The wireless charging coil 650 may be disposed in a connecting portion (the connection portion C shown in FIG. 1) configured to adjustably connect the keyboard body and a support.

It can be understood that the structure illustrated in this embodiment does not constitute a specific limitation on the wireless keyboard 200. In some other embodiments, the wireless keyboard 200 may include components more or fewer than those shown in the figure, or combine some components, or split some components, or have different component arrangements. The components shown in the figure may be implemented by hardware, software, or a combination of software and hardware.

The memory 620 may be configured to store program code, such as program code used for wirelessly charging an electronic stylus 300. The memory 620 may further store a Bluetooth address used to uniquely identify the wireless keyboard 200. In addition, the memory 620 may further store connection data of an electronic device that has been successfully paired with the wireless keyboard 200 before. For example, the connection data may be a Bluetooth address of the electronic device that has been successfully paired with the wireless keyboard 200. Based on the connection data, the wireless keyboard 200 can be automatically paired with the electronic device with no need for configuring a connection to the electronic device, for example, performing a validity check. The Bluetooth address may be a media access control (media access control, MAC) address.

The processor 610 may be configured to execute the foregoing application program code, and invoke relevant modules to implement functions of the wireless keyboard 200in the embodiments of this application, for example, implement a forward wireless charging function, a backward wireless charging function, a wireless communication function, and the like of the wireless keyboard 200. The processor 610 may include one or more processing units, and different processing units may be independent devices or may be integrated into one or more processors 610. The processor 610 may be specifically an integrated control chip, or may include a circuit including various active and/or passive components, and the circuit is configured to perform a function, of the processor 610, described in the embodiments of this application. The processor of the wireless keyboard 200 may be a microprocessor.

The wireless communications module 670 may be configured to support data exchange between the wireless keyboard 200 and other electronic devices in wireless communications such as Bluetooth (bluetooth, BT), global navigation satellite system (global navigation satellite system, GNSS), wireless local area network (wireless local area networks, WLAN) (for example, wireless fidelity (wireless fidelity, Wi-Fi) network), frequency modulation (frequency modulation, FM), near field communication (near field communication, NFC), and infrared (infrared, IR) technology. In some embodiments, the wireless communications module 670 may be a Bluetooth chip. The wireless keyboard 200 may be a Bluetooth keyboard. The wireless keyboard 200 may be paired with a Bluetooth chip of another electronic device by using the Bluetooth chip and establish a wireless connection, to implement wireless communication between the wireless keyboard 200 and the another electronic device through the wireless connection.

In addition, the wireless communications module 670 may further include an antenna. The wireless communications module 670 receives an electromagnetic wave by using the antenna, performs frequency modulation and filtering on an electromagnetic wave signal, and sends the processed signal to the processor 610. The wireless communications module 670 may further receive a to-be-sent signal from the processor 610, perform frequency modulation and amplification on the signal, convert the frequency-modulated and amplified signal into an electromagnetic wave by using the antenna, and radiate the electromagnetic wave.

**In** some embodiments, the wireless keyboard 200 may support forward wireless charging. The charging management module 640 may receive a wireless charging input through the second wireless charging coil 650 of the wireless keyboard 200. Specifically, the charging management module 640 is connected to the wireless charging coil 650 by using a matching circuit. The second wireless charging coil 650 may be coupled to the first wireless charging coil 570 of the foregoing tablet computer 100, to sense an alternating electromagnetic field emitted by the first wireless charging coil 570 of the tablet computer 100, and generate an alternating current signal. The alternating current signal generated by the second wireless charging coil 650 is transmitted to the charging management module 640 through the matching circuit, to wirelessly charge the battery 660.

The charging management module 640 may further supply power to the wireless keyboard 200 while charging the battery 660. The charging management module 640 receives an input from the battery 660, to supply power to the processor 610, the memory 620, an external memory, the wireless communications module 670, and the like. The charging management module 640 may be further configured to monitor parameters such as a battery capacity of the battery 660, a cycle count of the battery, and a state of health (leakage and impedance) of the battery. **In** some other embodiments, the charging management module 640 may be alternatively disposed in the processor 610.

It should be noted that the matching circuit may be integrated in the charging management module 640, or the matching circuit may be independent of the charging management module 640. This is not limited in this embodiment of this application. FIG. 9 is a schematic diagram of the hardware structure of the wireless keyboard 200 by using an example in which the matching circuit may be integrated in the charging management module 640.

It should be noted that the wireless charging receiving module 630 may be integrated with all functions of the first wireless receiving coil 240 and the first wireless receiving control module 230 shown in FIG. 5 to FIG. 7. The wireless charging receiving module 630 of the wireless keyboard 200 may be connected to an electronic device such as the tablet computer 100 by using a wireless charging apparatus, so that the electronic device such as the tablet computer 100 supplies power to the wireless keyboard 200.

It should be noted that, when the wireless keyboard 200 shown in FIG. 9 is the wireless keyboard 200 shown in FIG. 5, FIG. 6, or FIG. 7, the charging management module shown in FIG. 9 includes all functions of the first charging control module 220 shown in FIG. 5, FIG. 6, or FIG. 7.

For detailed descriptions of performing forward wireless charging by the wireless keyboard 200, refer to descriptions of a forward wireless charging principle of the wireless keyboard 200 in the foregoing embodiment. Details are not described in this embodiment of this application herein again.

A touch sensor is integrated in the touch panel 680. A notebook computer may receive a control command of a user for the notebook computer by using the touch panel 680 and the keyboard 690. It can be understood that the structure illustrated in this embodiment of this application does not constitute a specific limitation on the wireless keyboard 200. The wireless keyboard 200 may have more or fewer components than those shown in FIG. 9, may combine two or more components, or may have different component configurations. For example, a housing of the wireless keyboard 200 may be further provided with an accommodation cavity 201 for accommodating the electronic stylus 300. The second wireless charging coil 650 is disposed in the accommodation cavity 201, and is configured to wirelessly charge the electronic stylus 300 after the electronic stylus 300 is accommodated in the accommodation cavity 201.

For another example, an outer surface of the wireless keyboard 200 may further include components such as a key, an indicator light (which may indicate a state such as a battery level, an incoming/outgoing call, or a pairing mode), and a display (which may notify related information to the user). The key may be a physical key, a touch key (used in combination with the touch sensor), or the like, and is configured to trigger an operation such as power-on, power-off, starting charging, or stopping charging.

All wireless keyboards 200 provided in the following embodiments may include the foregoing hardware structure. The following describes in detail a wireless keyboard 200 provided in the embodiments of this application.

An embodiment of this application provides a wireless keyboard 200. As shown in FIG. 1, FIG. 3, or FIG. 4, the wireless keyboard 200 includes a keyboard body A, a support B configured for placing a tablet computer 100, and a connection portion C configured to adjustably connect the keyboard body A and the support B.

The connection portion C includes an accommodation cavity 201 provided with an opening 202 at one end. The accommodation cavity 201 is configured to accommodate the electronic stylus 300 shown in FIG. 2, through the opening 202.

In some embodiments, as shown in FIG. 1, the connection portion C may include a flexible connection piece C₁ and an accommodation part C₂. As shown in FIG. 1, the flexible connection piece C₁ is configured to bend to adjustably connect the keyboard body A and the support B. For example, the flexible connection piece C₁ may be a flexible foldable material.

As shown in FIG. 1, the accommodation part C₂ is fastened to a bending area of the flexible connection piece C₁. The accommodation part C₂ is hollow inside, and one end of the accommodation part C₂ is provided with the opening 202, to form the accommodation cavity 201. A shape of an inner wall (that is, the accommodation cavity 201) of the accommodation part C₂ is similar to a shape of a stylus body of the electronic stylus 300. For example, the inner wall of the accommodation part C₂ may be in any shape such as a cylinder or a prism. The accommodation part C₂ may be made of plastic.

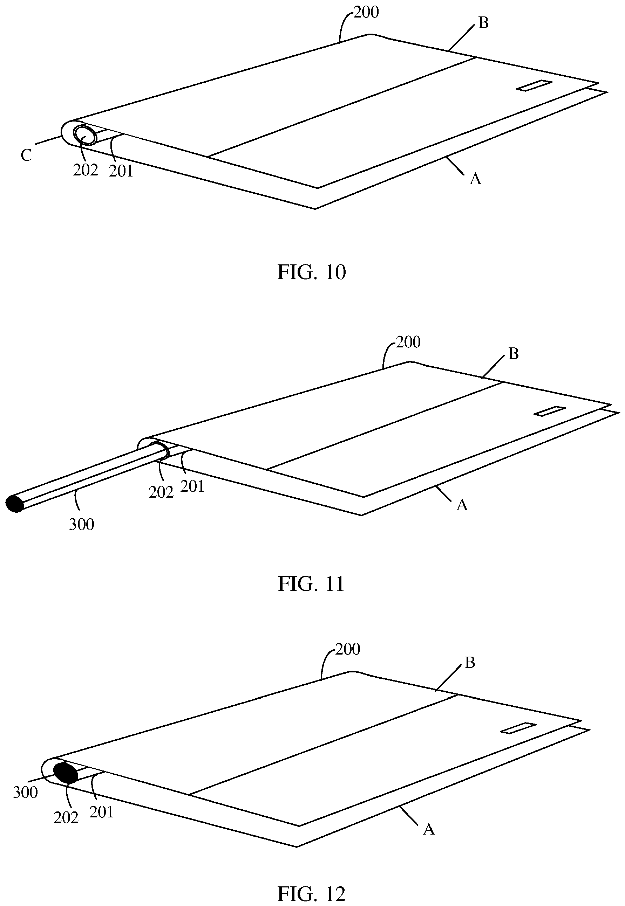

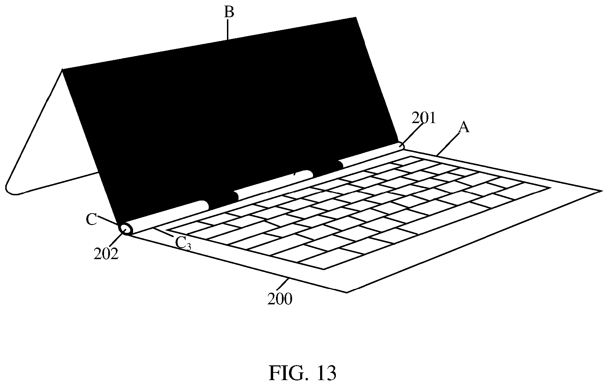

For example, FIG. 10 is a 3D diagram of the wireless keyboard 200 when the keyboard body A and the support B of the wireless keyboard 200 are closed and the electronic stylus 300 is not inserted into the accommodation cavity 201. FIG. 11 is a 3D diagram of the wireless keyboard 200 when the keyboard body A and the support B of the wireless keyboard 200 shown in FIG. 10 are closed and the electronic stylus 300 is not yet completely inserted into the accommodation cavity 201 through the opening 202. FIG. 12 is a 3D diagram of the wireless keyboard 200 after the keyboard body A and the support B of the wireless keyboard 200 shown in FIG. 10 are closed and the electronic stylus 300 is inserted into the accommodation cavity 201 through the opening 202. In some other embodiments, FIG. 13 is a schematic diagram of a product form of a wireless keyboard in a wireless charging system, where the foregoing connection portion C includes a rotating shaft C₃ configured to adjustably connect a keyboard body A and a support B. As shown in FIG. 13, the rotating shaft C₃ is hollow inside, and one end of the rotating shaft C₃ is provided with an opening 202, to form an accommodation cavity 201.

A second wireless output coil 250 is disposed in the accommodation cavity 201 described in any one of the foregoing embodiments, and the keyboard body A further includes a first wireless receiving coil 240. As shown in FIG. 5 to FIG. 7, the second wireless output coil 250 is connected to the first wireless receiving coil 240. After receiving an alternating current signal from a first wireless output coil 140, the first wireless receiving coil 240 directly transfers the alternating current signal to the second wireless output coil 250 by using a matching circuit.

In a prior-art solution, after the first wireless receiving coil 240 receives an alternating current signal from the first wireless output coil 140, in the wireless keyboard 200, an RX chip needs to be disposed, where the RX chip is configured to convert the alternating current signal received by the first wireless receiving coil 240 into a direct current signal, and a TX chip needs to be disposed to convert the direct current signal into an alternating current signal and transfer the alternating current signal to the second wireless output coil 250.

In this embodiment of this application, the first wireless receiving coil 240 with a suitable inductance value is disposed, and a first capacitor is disposed in a matching manner near the first wireless receiving coil 240, to form a resonant circuit; and the second wireless output coil 250 with a suitable inductance value is disposed, and a second capacitor is disposed in a matching manner near the second wireless output coil 250, to form a resonant circuit. The matching circuit is disposed between the first wireless receiving coil 240 and the second wireless output coil 250, thereby implementing direct transfer of an alternating current signal. This reduces use of an RX chip and a TX chip, and reduces a length of a wireless charging link, thereby improving reliability and efficiency of wireless charging, and reducing costs of the wireless keyboard 200.

The foregoing first wireless receiving control module 230 is configured to rectify, to a direct current signal, an alternating current signal generated by the first wireless receiving coil 240, perform control processing on the direct current signal, and then transfer the direct current signal to a second battery 210.

The foregoing second wireless output coil 250 is configured to generate an alternating electromagnetic field in response to an alternating current signal, to wirelessly charge an electronic stylus 300 accommodated in the accommodation cavity 201.

To sum up, the wireless keyboard 200 provided in the embodiments of this application not only has a function of accommodating the electronic stylus 300, but also can wirelessly charge the electronic stylus 300, and moreover, reduces a length of a wireless charging link, thereby improving reliability and efficiency of wireless charging, and reducing costs.

In the embodiment, the second wireless output control module 260 may receive, when detecting that the electronic stylus 300 is accommodated in the accommodation cavity 201 (namely, boxed), a direct current signal from the second battery 210 by using the first charging control module 220, and convert the direct current signal into an alternating current signal. Then, the second wireless output coil 250 may generate an alternating electromagnetic field in response to the alternating current signal, to wirelessly charge the electronic stylus 300 accommodated in the accommodation cavity 201.

Certainly, when detecting that the electronic stylus 300 is taken out of the accommodation cavity 201 (namely, unboxed), the second wireless output control module 260 may also stop receiving a direct current signal from the second battery 210. Alternatively, a processor of the wireless keyboard 200 may detect whether the electronic stylus 300 is unboxed or boxed, and then notify a detection result to the second wireless output control module 260, or the processor instructs, based on a detection result, the second wireless output control module 260 to perform a corresponding event.

In the embodiments of this application, a method for detecting whether the electronic stylus 300 is accommodated in the accommodation cavity 201 (the electronic stylus 300 is boxed) or the electronic stylus 300 is taken out of the accommodation cavity 201 (the electronic stylus 300 is unboxed), reference may be made to an unboxing/boxing detection method in a conventional technology, such as an unboxing/boxing detection method for a TWS headset in a conventional technology. Details are not described in the embodiments of this application herein.

In the embodiment, when the wireless keyboard 200 charges the electronic stylus 300, a corresponding device (for example, the tablet computer 100) is needed to wirelessly charge the wireless keyboard 200. The second battery 210 in the wireless keyboard 200 may store a specific quantity of electricity for supplying power to the wireless keyboard 200. However, the electricity stored by the second battery 210 cannot be used for backward charging of the electronic stylus 300. It can be understood that, if the second battery 210 provides an energy source used for cell preheating, before the second battery 210 is charged, the electricity in the second battery 210 is first consumed. A larger quantity of times of charging and discharging the second battery 210 indicates more wear of the second battery 210, affecting a service life of the second battery 210. In addition, when the first wireless receiving control module 230 inputs a direct current signal, the direct current signal can charge the second battery 210. Therefore, in a process of charging the second battery 210, the quantity of electricity of the second battery 210 may first decrease and then increase, which leads to unnecessary misunderstanding of the user, and causes the user to wrongly think that the second battery 210 is faulty.

To sum up, in the embodiments of this application, a direct current signal input by the first wireless receiving control module 230 provides an energy source used for cell preheating, so that a case in which the user wrongly thinks that the second battery 210 is faulty can be avoided, and unnecessary wear of the second battery 210 can also be reduced, thereby prolonging the service life of the second battery 210.

In some other embodiments, an elastic device is further disposed in the accommodation cavity 201. When the electronic stylus 300 is accommodated in the accommodation cavity 201, the elastic device is in contact with a second end 302 of the electronic stylus 300. As shown in FIG. 2, a first end 301 of the electronic stylus 300 is an end located at the opening 202 when the electronic stylus 300 is accommodated in the accommodation cavity 201, and the second end 302 is an end opposite the first end 301.

The elastic device is configured to: in response to a pressing operation performed by the user on the first end 301 of the electronic stylus 300 accommodated in the accommodation cavity 201, eject the electronic stylus 300 out of the accommodation cavity 201 from the second end 302 in a direction of the first end 301. The elastic device makes it easier for the user to take the electronic stylus 300 out of the accommodation cavity 201 of the wireless keyboard 200.

An embodiment of this application further provides a computer storage medium. The computer storage medium includes computer instructions. When the computer instructions are run on the foregoing wireless keyboard 200, the wireless keyboard 200 is enabled to perform the functions or steps performed by the wireless charging system in the foregoing embodiments.

An embodiment of this application further provides a computer program product. When the computer program product is run on a computer, the computer is enabled to perform the functions or steps performed by the wireless charging system in the foregoing embodiments.

Based on the descriptions of the foregoing implementations, a person skilled in the art may understand that, for ease and brevity of description, division into the foregoing functional modules is merely an example for illustration. In actual application, the foregoing functions may be allocated to different functional modules and implemented based on a requirement. That is, an inner structure of an apparatus is divided into different functional modules to implement all or some of the functions described above.

In the several embodiments provided in this application, it should be understood that the disclosed apparatus and method may be implemented in other manners. For example, the apparatus embodiment described above is merely an example for illustration. For example, division into the modules or units is merely logical function division, and another division manner may be used in actual implementation. For example, a plurality of units or components may be combined, or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, that is, the parts may be located in one place or distributed in a plurality of different places. Some or all of the units may be selected based on an actual requirement to achieve the objectives of the solutions in the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and is sold or used as an independent product, the integrated unit may be stored in a readable storage medium. Based on such an understanding, the technical solutions in the embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A wireless charging system, comprising a tablet computer (100), a wireless keyboard (200), and an electronic stylus (300), wherein the wireless keyboard (200) comprises a keyboard body, a support configured for placing the tablet computer (100), and a connection portion configured to adjustably connect the keyboard body and the support;
a first battery (110), a first wireless output control module (130), and a first wireless output coil (140) are disposed in the tablet computer (100), the first wireless output control module (130) is connected to the first battery (110), and the first wireless output coil (140) is connected to the first wireless output control module (130);
a first wireless receiving coil (240), a first wireless receiving control module (230), a first charging control module (220), and a second battery (210) are disposed in the keyboard body, the first wireless receiving coil (240) receives an electromagnetic signal sent by the first wireless output coil (140), the first wireless receiving control module (230) is connected to the first wireless receiving coil (240), the first charging control module (220) is connected to the first wireless receiving control module (230), and the second battery (210) is connected to the first charging control module (220);
the connection portion comprises an accommodation cavity (201) provided with an opening (202) at one end, and the accommodation cavity (201) is configured to accommodate the electronic stylus (300) through the opening (202);
a second wireless output coil (250) is disposed in the accommodation cavity (201), and the second wireless output coil (250) is connected to the first wireless receiving coil (240); and
the second wireless output coil (250) is configured to wirelessly charge the electronic stylus (300) accommodated in the accommodation cavity (201).

2. The wireless charging system according to claim 1, wherein the second wireless output coil (250) and the first wireless receiving coil (240) are connected by using a matching circuit, the matching circuit comprises a first capacitor and a second capacitor, the first capacitor and the first wireless receiving coil (240) form a resonant circuit, and the second capacitor and the second wireless output coil (250) form a resonant circuit.

3. The wireless charging system according to claim 1 or 2, wherein a third wireless output coil (150) is further disposed in the tablet computer (100), the third wireless output coil (150) is connected to the first wireless output control module (130), and the third wireless output coil (150) is configured to wirelessly charge the electronic stylus (300) adhered to the tablet computer (100).

4. The wireless charging system according to claim 1 or 2, wherein a second wireless output control module (180) and a third wireless output coil (150) are further disposed in the tablet computer (100), the second wireless output control module (180) is connected to the first battery (110), the third wireless output coil (150) is connected to the second wireless output control module (180), and the third wireless output coil (150) is configured to wirelessly charge the electronic stylus (300) adhered to the tablet computer (100).

5. The wireless charging system according to claim 4, wherein a voltage stabilization control module is disposed in the tablet computer (100), the voltage stabilization control module is connected to the first battery (110), and the first wireless output control module (130) and the second wireless output control module (180) are both connected to the voltage stabilization control module.

6. The wireless charging system according to claim 3, wherein a first control switch (160) is disposed between the first wireless output coil (140) and the first wireless output control module (130), and a second control switch (170) is disposed between the third wireless output coil (150) and the first wireless output control module (130).

7. The wireless charging system according to any one of claims 1 to 6, wherein a second wireless receiving coil (340), a second wireless receiving control module (330), a second charging control module (320), and a third battery (310) are disposed in the electronic stylus (300);
the second wireless receiving coil (340) receives an electromagnetic signal sent by the second wireless output coil (250); and
the second wireless receiving control module (330) is connected to the second wireless receiving coil (340), the second charging control module (320) is connected to the second wireless receiving control module (330), and the third battery (310) is connected to the second wireless receiving control module (330).

8. The wireless charging system according to any one of claims 1 to 7, wherein the connection portion comprises a rotating shaft, and the rotating shaft is configured to adjustably connect the keyboard body and the support; and
the rotating shaft is hollow inside, and one end of the rotating shaft is provided with an opening (202), to form the accommodation cavity (201).

9. The wireless charging system according to any one of claims 1 to 7, wherein the connection portion comprises a flexible connection piece and an accommodation part;
the flexible connection piece is configured to bend to adjustably connect the keyboard body and the support; and
the accommodation part is fastened to a bending area of the flexible connection piece, the accommodation part is hollow inside, and one end of the accommodation part is provided with an opening (202), to form the accommodation cavity (201).

10. The wireless charging system according to any one of claims 1 to 9, wherein an elastic device is further disposed in the accommodation cavity (201), and when the electronic stylus (300) is accommodated in the accommodation cavity (201), the elastic device is in contact with a second end (302) of the electronic stylus (300);
the elastic device is configured to: in response to a pressing operation performed by a user on a first end (301) of the electronic stylus (300) accommodated in the accommodation cavity (201), eject the electronic stylus (300) out of the accommodation cavity (201) from the second end (302) in a direction of the first end (301); and
the first end (301) is an end located at the opening (202) when the electronic stylus (300) is accommodated in the accommodation cavity (201), and the second end (302) is an opposite of the first end (301).

## Patentansprüche

1. Ein drahtloses Ladesystem, umfassend einen Tablet-Computer (100), eine drahtlose Tastatur (200) und einen elektronischen Stift (300), wobei die drahtlose Tastatur (200) einen Tastaturkörper, eine Halterung zur Platzierung des Tablet-Computers (100) und einen Verbindungsteil zur einstellbaren Verbindung des Tastaturkörpers und der Halterung umfasst;
eine erste Batterie (110), ein erstes drahtloses Ausgangssteuerungsmodul (130) und eine erste drahtlose Ausgangsspule (140) sind im Tablet-Computer (100) angeordnet, das erste drahtlose Ausgangssteuerungsmodul (130) ist mit der ersten Batterie (110) verbunden, und die erste drahtlose Ausgangsspule (140) ist mit dem ersten drahtlosen Ausgangssteuerungsmodul (130) verbunden;
eine erste drahtlose Empfangsspule (240), ein erstes drahtloses Empfangssteuerungsmodul (230), ein erstes Ladesteuerungsmodul (220) und eine zweite Batterie (210) sind im Tastaturkörper angeordnet, die erste drahtlose Empfangsspule (240) empfängt ein elektromagnetisches Signal, das von der ersten drahtlosen Ausgangsspule (140) gesendet wird, das erste drahtlose Empfangssteuerungsmodul (230) ist mit der ersten drahtlosen Empfangsspule (240) verbunden, das erste Ladesteuerungsmodul (220) ist mit dem ersten drahtlosen Empfangssteuerungsmodul (230) verbunden, und die zweite Batterie (210) ist mit dem ersten Ladesteuerungsmodul (220) verbunden;
der Verbindungsteil umfasst einen Aufnahmeraum (201) mit einer Öffnung (202) an einem Ende, und der Aufnahmeraum (201) ist so konfiguriert, dass er den elektronischen Stift (300) durch die Öffnung (202) aufnehmen kann;
eine zweite drahtlose Ausgangsspule (250) ist im Aufnahmeraum (201) angeordnet, und die zweite drahtlose Ausgangsspule (250) ist mit der ersten drahtlosen Empfangsspule (240) verbunden; und
die zweite drahtlose Ausgangsspule (250) ist so konfiguriert, dass sie den im Aufnahmeraum (201) untergebrachten elektronischen Stift (300) drahtlos auflädt.

2. Das drahtlose Ladesystem nach Anspruch 1, wobei die zweite drahtlose Ausgangsspule (250) und die erste drahtlose Empfangsspule (240) unter Verwendung eines Abstimmschaltkreises verbunden sind, der Abstimmschaltkreis umfasst einen ersten Kondensator und einen zweiten Kondensator, der erste Kondensator und die erste drahtlose Empfangsspule (240) bilden einen Resonanzkreis, und der zweite Kondensator und die zweite drahtlose Ausgangsspule (250) bilden einen Resonanzkreis.

3. Das drahtlose Ladesystem nach Anspruch 1 oder 2, wobei eine dritte drahtlose Ausgangsspule (150) zusätzlich im Tablet-Computer (100) angeordnet ist, die dritte drahtlose Ausgangsspule (150) ist mit dem ersten drahtlosen Ausgangssteuerungsmodul (130) verbunden, und die dritte drahtlose Ausgangsspule (150) ist so konfiguriert, dass sie den am Tablet-Computer (100) haftenden elektronischen Stift (300) drahtlos auflädt.

4. Das drahtlose Ladesystem gemäß Anspruch 1 oder 2, wobei ein zweites drahtloses Ausgangssteuerungsmodul (180) und eine dritte drahtlose Ausgangsspule (150) weiterhin im Tablet-Computer (100) angeordnet sind, das zweite drahtlose Ausgangssteuerungsmodul (180) mit der ersten Batterie (110) verbunden ist, die dritte drahtlose Ausgangsspule (150) mit dem zweiten drahtlosen Ausgangssteuerungsmodul (180) verbunden ist und die dritte drahtlose Ausgangsspule (150) so konfiguriert ist, dass sie den elektronischen Stift (300), der am Tablet-Computer (100) haftet, drahtlos auflädt.

5. Das drahtlose Ladesystem gemäß Anspruch 4, wobei ein Spannungsstabilisierungssteuerungsmodul im Tablet-Computer (100) angeordnet ist, das Spannungsstabilisierungssteuerungsmodul mit der ersten Batterie (110) verbunden ist und sowohl das erste drahtlose Ausgangssteuerungsmodul (130) als auch das zweite drahtlose Ausgangssteuerungsmodul (180) mit dem Spannungsstabilisierungssteuerungsmodul verbunden sind.

6. Das drahtlose Ladesystem gemäß Anspruch 3, wobei ein erster Steuerungsschalter (160) zwischen der ersten drahtlosen Ausgangsspule (140) und dem ersten drahtlosen Ausgangssteuerungsmodul (130) angeordnet ist und ein zweiter Steuerungsschalter (170) zwischen der dritten drahtlosen Ausgangsspule (150) und dem ersten drahtlosen Ausgangssteuerungsmodul (130) angeordnet ist.

7. Das drahtlose Ladesystem gemäß einem der Ansprüche 1 bis 6, wobei eine zweite drahtlose Empfangsspule (340), ein zweites drahtloses Empfangssteuerungsmodul (330), ein zweites Lade-Steuermodul (320) und eine dritte Batterie (310) im elektronischen Stift (300) angeordnet sind;
die zweite drahtlose Empfangsspule (340) empfängt ein elektromagnetisches Signal, das von der zweiten drahtlosen Ausgangsspule (250) gesendet wird; und
das zweite drahtlose Empfangssteuerungsmodul (330) ist mit der zweiten drahtlosen Empfangsspule (340) verbunden, das zweite Lade-Steuermodul (320) ist mit dem zweiten drahtlosen Empfangssteuerungsmodul (330) verbunden, und die dritte Batterie (310) ist mit dem zweiten drahtlosen Empfangssteuerungsmodul (330) verbunden.

8. Das drahtlose Ladesystem gemäß einem der Ansprüche 1 bis 7, wobei der Verbindungsabschnitt eine Drehachse umfasst, und die Drehachse so konfiguriert ist, dass sie den Tastaturkörper und die Stütze verstellbar verbindet; und
die Drehachse ist innen hohl, und ein Ende der Drehachse ist mit einer Öffnung (202) versehen, um die Aufnahmekammer (201) zu bilden.

9. Das drahtlose Ladesystem gemäß einem der Ansprüche 1 bis 7, wobei der Verbindungsabschnitt ein flexibles Verbindungselement und einen Aufnahmeteil umfasst;
das flexible Verbindungselement so konfiguriert ist, dass es sich biegt, um den Tastaturkörper und die Stütze verstellbar zu verbinden; und
Der Unterbringungsteil ist an einem Biegeabschnitt des flexiblen Verbindungsteils befestigt, der Unterbringungsteil ist innen hohl, und ein Ende des Unterbringungsteils ist mit einer Öffnung (202) versehen, um die Unterbringungshöhle (201) zu bilden.

10. Das drahtlose Ladesystem gemäß einem der Ansprüche 1 bis 9, wobei in der Unterbringungshöhle (201) zusätzlich eine elastische Vorrichtung angeordnet ist, und wenn der elektronische Stift (300) in der Unterbringungshöhle (201) untergebracht ist, steht die elastische Vorrichtung mit einem zweiten Ende (302) des elektronischen Stifts (300) in Kontakt;
Die elastische Vorrichtung ist so konfiguriert, dass sie: als Reaktion auf eine vom Benutzer ausgeführte Druckoperation an einem ersten Ende (301) des in der Unterbringungshöhle (201) untergebrachten elektronischen Stifts (300) den elektronischen Stift (300) aus der Unterbringungshöhle (201) vom zweiten Ende (302) in Richtung des ersten Endes (301) ausstößt; und
Das erste Ende (301) ist ein Ende, das sich an der Öffnung (202) befindet, wenn der elektronische Stift (300) in der Unterbringungshöhle (201) untergebracht ist, und das zweite Ende (302) ist das gegenüberliegende Ende des ersten Endes (301).

## Revendications

1. Un système de charge sans fil, comprenant une tablette (100), un clavier sans fil (200) et un stylet électronique (300), dans lequel le clavier sans fil (200) comprend un corps de clavier, un support configuré pour placer la tablette (100) et une partie de connexion configurée pour connecter de manière ajustable le corps du clavier et le support ;
une première batterie (110), un premier module de contrôle de sortie sans fil (130) et une première bobine de sortie sans fil (140) sont disposés dans la tablette (100), le premier module de contrôle de sortie sans fil (130) est connecté à la première batterie (110), et la première bobine de sortie sans fil (140) est connectée au premier module de contrôle de sortie sans fil (130) ;
une première bobine de réception sans fil (240), un premier module de contrôle de réception sans fil (230), un premier module de contrôle de charge (220) et une deuxième batterie (210) sont disposés dans le corps du clavier, la première bobine de réception sans fil (240) reçoit un signal électromagnétique envoyé par la première bobine de sortie sans fil (140), le premier module de contrôle de réception sans fil (230) est connecté à la première bobine de réception sans fil (240), le premier module de contrôle de charge (220) est connecté au premier module de contrôle de réception sans fil (230), et la deuxième batterie (210) est connectée au premier module de contrôle de charge (220) ;
la partie de connexion comprend une cavité d'accueil (201) dotée d'une ouverture (202) à une extrémité, et la cavité d'accueil (201) est configurée pour accueillir le stylet électronique (300) à travers l'ouverture (202) ;
une deuxième bobine de sortie sans fil (250) est disposée dans la cavité d'accueil (201), et la deuxième bobine de sortie sans fil (250) est connectée à la première bobine de réception sans fil (240) ; et
la deuxième bobine de sortie sans fil (250) est configurée pour charger sans fil le stylet électronique (300) logé dans la cavité d'accueil (201).

2. Le système de charge sans fil selon la revendication 1, dans lequel la deuxième bobine de sortie sans fil (250) et la première bobine de réception sans fil (240) sont connectées à l'aide d'un circuit d'adaptation, le circuit d'adaptation comprend un premier condensateur et un deuxième condensateur, le premier condensateur et la première bobine de réception sans fil (240) forment un circuit résonant, et le deuxième condensateur et la deuxième bobine de sortie sans fil (250) forment un circuit résonant.

3. Le système de charge sans fil selon la revendication 1 ou 2, dans lequel une troisième bobine de sortie sans fil (150) est en outre disposée dans la tablette (100), la troisième bobine de sortie sans fil (150) est connectée au premier module de contrôle de sortie sans fil (130), et la troisième bobine de sortie sans fil (150) est configurée pour charger sans fil le stylet électronique (300) adhéré à la tablette (100).

4. Le système de charge sans fil selon la revendication 1 ou 2, dans lequel un deuxième module de contrôle de sortie sans fil (180) et une troisième bobine de sortie sans fil (150) sont en outre disposés dans la tablette (100), le deuxième module de contrôle de sortie sans fil (180) est connecté à la première batterie (110), la troisième bobine de sortie sans fil (150) est connectée au deuxième module de contrôle de sortie sans fil (180), et la troisième bobine de sortie sans fil (150) est configurée pour charger sans fil le stylet électronique (300) adhéré à la tablette (100).

5. Le système de charge sans fil selon la revendication 4, dans lequel un module de contrôle de stabilisation de tension est disposé dans la tablette (100), le module de contrôle de stabilisation de tension est connecté à la première batterie (110), et le premier module de contrôle de sortie sans fil (130) et le deuxième module de contrôle de sortie sans fil (180) sont tous deux connectés au module de contrôle de stabilisation de tension.

6. Le système de charge sans fil selon la revendication 3, dans lequel un premier interrupteur de contrôle (160) est disposé entre la première bobine de sortie sans fil (140) et le premier module de contrôle de sortie sans fil (130), et un deuxième interrupteur de contrôle (170) est disposé entre la troisième bobine de sortie sans fil (150) et le premier module de contrôle de sortie sans fil (130).

7. Le système de charge sans fil selon l'une quelconque des revendications 1 à 6, dans lequel une deuxième bobine de réception sans fil (340), un deuxième module de contrôle de réception sans fil (330), un deuxième module de contrôle de charge (320) et une troisième batterie (310) sont disposés dans le stylet électronique (300) ;
la deuxième bobine de réception sans fil (340) reçoit un signal électromagnétique envoyé par la deuxième bobine de sortie sans fil (250) ; et
le deuxième module de contrôle de réception sans fil (330) est connecté à la deuxième bobine de réception sans fil (340), le deuxième module de contrôle de charge (320) est connecté au deuxième module de contrôle de réception sans fil (330), et la troisième batterie (310) est connectée au deuxième module de contrôle de réception sans fil (330).

8. Le système de charge sans fil selon l'une quelconque des revendications 1 à 7, dans lequel la partie de connexion comprend un arbre rotatif, et l'arbre rotatif est configuré pour connecter de manière ajustable le corps du clavier et le support ; et
l'arbre rotatif est creux à l'intérieur, et une extrémité de l'arbre rotatif est pourvue d'une ouverture (202), pour former la cavité d'accueil (201).

9. Le système de charge sans fil selon l'une quelconque des revendications 1 à 7, dans lequel la partie de connexion comprend une pièce de connexion flexible et une partie d'accueil ;
la pièce de connexion flexible est configurée pour se plier afin de connecter de manière ajustable le corps du clavier et le support ; et
la partie d'hébergement est fixée à une zone de pliage de la pièce de connexion flexible, la partie d'hébergement est creuse à l'intérieur, et une extrémité de la partie d'hébergement est pourvue d'une ouverture (202), pour former la cavité d'hébergement (201).

10. Le système de charge sans fil selon l'une quelconque des revendications 1 à 9, dans lequel un dispositif élastique est en outre disposé dans la cavité d'hébergement (201), et lorsque le stylet électronique (300) est logé dans la cavité d'hébergement (201), le dispositif élastique est en contact avec une seconde extrémité (302) du stylet électronique (300);
le dispositif élastique est configuré pour : en réponse à une opération de pression effectuée par un utilisateur sur une première extrémité (301) du stylet électronique (300) logé dans la cavité d'hébergement (201), éjecter le stylet électronique (300) hors de la cavité d'hébergement (201) depuis la seconde extrémité (302) dans une direction de la première extrémité (301); et
la première extrémité (301) est une extrémité située à l'ouverture (202) lorsque le stylet électronique (300) est logé dans la cavité d'hébergement (201), et la seconde extrémité (302) est l'opposé de la première extrémité (301).
